# EUROPEAN PATENT APPLICATION

(11) **EP 4 201 873 A1**
(43) Date of publication of application: **28.06.2023**
(21) Application number: 21020647.0
(22) Date of filing: 21.12.2021
(51) Int. Cl.: C01B 3/04, C01B 3/38, B01J 8/06

(54) **METHOD AND APPARATUS TO GENERATE A HYDROGEN-RICH PRODUCT**

(71) Applicant: L'Air Liquide, Société Anonyme pour l'Etude et l'Exploitation des Procédés Georges Claude, 75007 Paris (FR)
(72) Inventor: ROSSI, Umberto, 60439 Frankfurt am Main (DE); ULBER, Dieter, 60439 Frankfurt am Main (DE)
(74) Representative: Air Liquide

(57) **Abstract**

A method for generating hydrogen is provided. In certain embodiments, the method can include the steps of: introducing a hydrocarbon feed stream, at a first temperature, into a first reaction zone under conditions effective for producing a process stream, wherein the process stream is at a second temperature that is greater than the first temperature; introducing a second feed stream into a second reaction zone under conditions effective for producing a hydrogen product stream, wherein heat needed for producing the hydrogen product stream from the second feed stream is at least partially provided by heat exchange with the process stream; and withdrawing the hydrogen product stream from the second reaction zone.

## Description

### Technical Field of the Invention

The present invention relates to an apparatus and method for hydrogen production, preferably applied to - but not limited to - existing industrial units. More specifically, embodiments of the present invention are related to reducing the carbon footprint of a reforming unit via reduction in produced carbons.

### Background of the Invention

In an effort to provide green energy, reducing carbon footprints of industrial units is becoming increasingly important. Moreover, as hydrogen is quickly becoming the preferred energy carrier of the future due to its potential for zero carbon emissions, production of hydrogen in an environmentally sensitive manner is becoming increasingly more important.

As an alternative to CO2 capture of existing hydrogen production facilities, it is also possible to use a decarbonized feedstock such as ammonia ("NH₃") for H₂ production. By using NH3 as the feed stream instead of CH4, the source of carbon on the process side is eliminated. However, there are currently no suitable low-carbon H2 production processes available on the market at large scale, and therefore, a production of H2 based on NH3 would be extremely expensive today.

One problem with the current state of the art solutions is that a high CO2 capture rate of more than 90% in a standard steam methane reformer ("SMR") plant can only be obtained by a flue gas capture unit. However, this solution entails a significant economical penalty, since the capture cost of CO2 from flue gas requires both high capital expenditure and operating expenditure. Moreover, disposal of the captured CO2 requires additional steps and investments.

In addition to improving carbon capture of existing hydrogen production facilities, finding alternative, carbon-free feedstocks has become a large focus, since the byproducts of these carbon-free feedstocks will not contain any carbon.

Ammonia is widely mentioned as one of the possible candidates to generate hydrogen without emitting CO₂. EP 3 028 990 B1 teaches a process in which ammonia is catalytically cleaved to form hydrogen and nitrogen. As the process is endothermic, a small portion of product hydrogen is used to provide the necessary heat for the reaction via combustion in the presence of air. The reference also discloses use of waste heat from the flue gas and the product gas stream to preheat the incoming feed stream.

However, this reference has several drawbacks. First, it requires burning a portion of the hydrogen produced to provide the heating to the cracking reaction, thus reducing the overall plant yield. Additionally, to achieve substantial volumes of hydrogen produced, it would require a massive scale up of the current ammonia crackers. In this prior art solution, the ammonia cracking unit is the sole hydrogen production unit.

Further, the combustion gas will contact the catalyst tubes filled with ammonia cracking catalyst at very high temperatures, in excess of 1500°C. This very high temperature will pose serious mechanical issues, and also require special material selection. As a consequence, very precious material must be selected, leading to an increase in the cost of such a solution.

Further, the combustion of hydrogen in the presence of large amount of nitrogen can present environmental issues connected to NOx emissions.

Finally, the solution presented in EP 3 028 990 B1 does not allow for an easy plug-in into existing hydrogen production units, thereby limiting its deployment into the market, since production plants take many years to design and build.

Therefore, there is a need in the market to provide an apparatus and method that can produce hydrogen with a lower carbon footprint and at an economical price.

### Summary of the Invention

The present invention is directed to an apparatus and method that satisfies at least one of these needs. In certain embodiments, the invention may include a solution to convert a non-fossil feedstock into a hydrogen containing product, therefore greatly reducing the carbon footprint of said product. This is achieved by at least partially producing hydrogen from a non-carbon containing feedstock.

Further, certain embodiments of the present invention minimizes the impact on the overall hydrogen production cost of converting non-fossil feedstocks by minimizing the need for special materials and equipment.

Certain embodiments of the present invention solve the problems of methods known heretofore by a surprisingly simple combination of two conversion steps, combined together to maximize the overall efficiency of the plant:
- first a conversion of a fossil-based feedstock into a first process stream (e.g., hydrogen-rich stream) at elevated temperatures (e.g., > 500°C); and
- then a conversion of a non-fossil feedstock (e.g., an ammonia-rich stream) into a hydrogen-rich stream, with at least a portion of the heat for the conversion coming from the hydrogen-rich stream produced in said first conversion step.

In the example of using an ammonia containing stream as non-fossil feed, the embodiment allows the use of less precious materials compared to other alternative solutions (like co-feeding of ammonia and hydrocarbons), as the gas-heated reactor that converts the non-fossil feed operates at a substantially lower temperature than conventional hydrocarbon conversion reactors (e.g. Steam Methane Reformers).

Another advantage of certain embodiments of the present invention allow for minimization of the plant section where ammonia conversion takes place (i.e., the gas-heated reactor fed with the non-fossil feed stream), as the rest of the plan can employ substantially conventional materials.

A method for generating hydrogen is provided. The method can include the steps of: introducing a hydrocarbon feed stream, at a first temperature, into a first reaction zone under conditions effective for producing a process stream, wherein the process stream is at a second temperature that is greater than the first temperature; introducing a second feed stream into a second reaction zone under conditions effective for producing a hydrogen product stream, wherein heat needed for producing the hydrogen product stream from the second feed stream is at least partially provided by heat exchange with the process stream; and withdrawing the hydrogen product stream from the second reaction zone.

In optional embodiments:
- the second temperature is above 500°C, preferably above 700°C, more preferably above 800°C.
- the second feed stream comprises ammonia and is substantially free of hydrocarbons.
- the conditions effective for producing a process stream include catalytically converting the hydrocarbon feed stream in the presence of steam, wherein the conditions effective for producing the hydrogen product stream comprise an absence of steam.
- the first reaction zone is disposed within an autothermal reformer (ATR) or a steam methane reformer (SMR).
- the second reaction zone is disposed within a gas heated reformer or a shell and tube heat exchanger.

In another embodiment, an apparatus for generating hydrogen is provided. In this embodiment, the apparatus can include: a first reaction zone configured to convert a hydrocarbon feed stream at a first temperature into a process stream, wherein the process stream is at a second temperature that is greater than the first temperature; and a second reaction zone configured to convert a second feed stream into a hydrogen product stream, wherein the second reaction zone is in fluid communication with the first reaction zone, such that the second reaction zone is configured to exchange heat between the process stream and the second feed stream.

In optional embodiments of the apparatus:
- the second temperature is above 500°C, preferably above 700°C, more preferably above 800°C.
- the second reaction zone is in fluid communication with an ammonia source such that the second feed stream comprises ammonia.
- the heat exchange between the process stream and the second feed stream is conducted via indirect or direct heat exchange.
- the second reaction zone is disposed within a gas heated reformer or a shell and tube heat exchanger.

In yet another embodiment, a method to retrofit an existing hydrogen generating plant is provided. The method preferably may include the steps of: providing the existing hydrogen generating plant, wherein the existing hydrogen generating plant uses hydrocarbons such as natural gas as a feed stream to produce hydrogen, wherein the existing hydrogen generating plant comprises a first reaction zone that is configured to convert hydrocarbons that are introduced to the first reaction zone at a first temperature to a process stream exiting the first reaction zone at a second temperature, wherein the second temperature is greater than the first temperature; producing an upgraded hydrogen generating plant by adding a second reaction zone to the existing hydrogen generating plant, wherein the second reaction zone is located downstream of the first reaction zone, wherein the second reaction zone is configured to convert a second feed stream into a hydrogen product stream, wherein the second reaction zone is in fluid communication with the first reaction zone, such that the second reaction zone is configured to exchange heat between the process stream and the second feed stream, thereby using heat from the process stream to carryout out a conversion reaction of the second feed stream to produce a hydrogen product stream.

In optional embodiments of the method:
- the upgraded hydrogen generating plant is configured to produce less steam than the existing hydrogen generating plant.
- the second reaction zone is in fluid communication with an ammonia source such that the second feed stream comprises ammonia.
- the heat exchange between the process stream and the second feed stream is conducted via indirect or direct heat exchange.

### Brief Description of the Drawings

These and other features, aspects, and advantages of the present invention will become better understood with regard to the following description, claims, and accompanying drawings. It is to be noted, however, that the drawings illustrate only several embodiments of the invention and are therefore not to be considered limiting of the invention's scope as it can admit to other equally effective embodiments.
FIG. 1 shows a hydrogen production facility in accordance with a first embodiment of the present invention.
FIG. 2 shows a hydrogen production facility in accordance with a second embodiment of the present invention.
FIG. 3 shows typical operating conditions of a hydrogen production facility in accordance with an embodiment of the present invention.
FIG. 4 shows a hydrogen production facility in accordance with a another embodiment of the present invention.

### Detailed Description

While the invention will be described in connection with several embodiments, it will be understood that it is not intended to limit the invention to those embodiments. On the contrary, it is intended to cover all the alternatives, modifications and equivalence as may be included within the spirit and scope of the invention defined by the appended claims.

One of the main criticalities in the ammonia conversion into hydrogen is the material selection, especially when conversion at elevated temperatures and pressures is desired. Precious materials are typically required for such applications, like the Inconel 600 family.

Conversion at high temperatures, on the other hand, is beneficial as a higher yield toward hydrogen can be achieved, especially when the reaction is carried out at high pressure. Pressure, in a similar way like for hydrocarbons reforming, is not beneficial *per se* on the reactants conversion. Nevertheless, from an industrial perspective, a high operating pressure is highly desirable as it allows containment of the equipment volumes, as well as delivering a pressurized product to battery limit.

Certain embodiments of the present invention tackle this issue with a solution to maximize ammonia conversion whilst minimizing the need of special materials.

Further, certain embodiments of the invention can be relatively easily implemented in an existing hydrogen production unit. In this embodiment, a second reaction zone can be included wherein a second feed stream is introduced into the second reaction zone and the heat needed for converting it to hydrogen is provided by exchanging heat (either directly or indirectly) with the first process stream (which contains hydrogen and is at an elevated temperature).

This leads to less costs compared to other alternative solutions (e.g., co-feeding the NH3 together with the hydrocarbon containing feedstock), which requires an upgrade of the material of construction of several sections of the hydrogen production section of the plant. Therefore, adding a gas-heated reactor for NH₃ conversion is less capital and engineering intensive compared to the before mentioned option, and also reduces the carbon intensity of the hydrogen production unit.

Gas heated reactors can be used to revamp hydrogen production units, for capacity increase or steam production reduction. In methods known heretofore, however, the gas heated reactors use hydrocarbons as feed, reforming them to obtain hydrogen typically in tubes filled with catalyst. The hydrocarbon reforming reaction is favored by high temperature, thus the temperature at the outlet of the catalyst-filled tubes is maximized. As a consequence, the reactor works under harsh conditions:
- the tube temperature is pushed to the maximum;
- the temperature difference between inside and outside the tubes is minimized (to achieve high temperature inside the tubes), thus requiring large exchanging areas.

Furthermore, the present invention solves the drawbacks of the prior art connected to the high operating temperature in gas heated reactors. The ammonia cracking reaction, in fact, requires lower operating temperatures than the hydrocarbon reforming one. In fact, the former is typically carried out between 450°Cand 750°C, preferably between 500°C and 650°C. While the latter is generally carried out between 600°C and 900°C, preferably above 800°C to minimize the amount of unreacted hydrocarbons.

Advantageously, the combination of a first reaction at higher temperature with a second at lower temperature brings additional benefits and overcomes some of the problems associated with previous methods discussed herein. Taking for example a gas heated reactor for ammonia cracking arranged in a tubular fashion, with a tube side entailing a plurality of catalyst filled tubes where ammonia is reacted to generate a hydrogen rich product, and a shell side where the process gas is cooled to provide the needed heat for the ammonia conversion reaction:
- the operating temperatures in the gas heated reactors are lower than a comparable gas heated reactor for hydrocarbon reforming, in particular for embodiments with tubular gas heated reactor this means that the tube design temperature will be mild
- the temperature difference from inside and outside the tubes is higher in an ammonia conversion gas heated reactor, leading to lower heat exchange area requirement and thus a more compact equipment with minimized cost

Surprisingly, certain embodiments of the present invention also may have the following beneficial side-effects:
- by using a portion of the heat contained in the hydrogen-rich stream, the overall plant steam production is reduced this is a feature very valuable when excess steam production cannot be valorized; and
- by generating a hydrogen-rich stream without producing any water molecule (contrary to e.g., methane reforming), the plant steam production is further reduced, as no heat of condensation from the steam contained in the hydrogen-rich stream to be cooled is available for steam generation, thus further reducing the steam co-production.

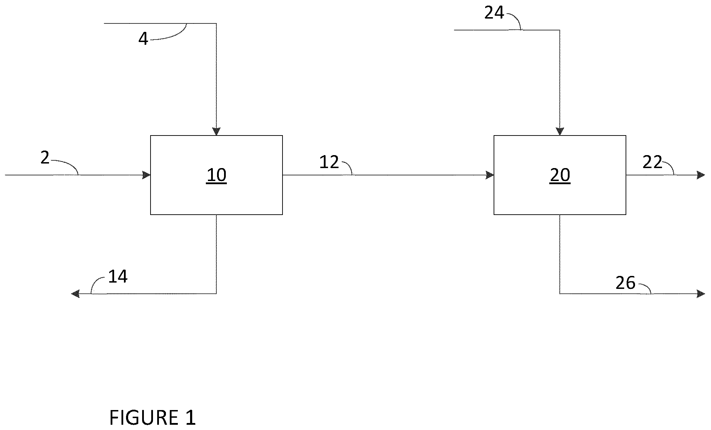

Referring to Figure 1. A first feedstock stream 2 which contains at least a portion of fossil components (e.g. hydrocarbons), is at least partially endothermically reacted in first reactor 10, generating a first process stream 12 that has a certain amount of heat at a temperature level suitable for ammonia conversion to hydrogen. In first reactor 10, the heat required to chemically transform stream 2 into first process stream 12 is, at least partially, provided by stream 4, which is cooled in first reactor 10 into stream 14. In certain embodiments, stream 4 can be a flue gas stream resulting from combustion of a fuel in the presence of an oxidizer in manners known with SMR.

In second reactor 20, a second feedstock stream 24, which contains at least a portion of non-fossil components (e.g, ammonia), is at least partially endothermically reacted to generate a second process stream 26, which contains at least a portion of hydrogen. In second reactor 20, the heat required to chemically transform stream 24 into stream 26 is provided, at least partially, by first process stream 12. In the embodiment shown in FIG. 1, second reactor 20 preferably includes a shell and tube heat exchanger in which the tubes are filled with catalyst that are configured to catalytically convert ammonia to hydrogen in an endothermic reaction that is advanced using indirect heat exchange from first process stream 12. Cooled first process stream 22 comprises hydrogen, as well as unreacted hydrocarbons and other components typically associated with process streams of ATRs and SMRs. Second process stream 26 comprises mostly hydrogen and nitrogen, along with lower amounts of unreacted ammonia.

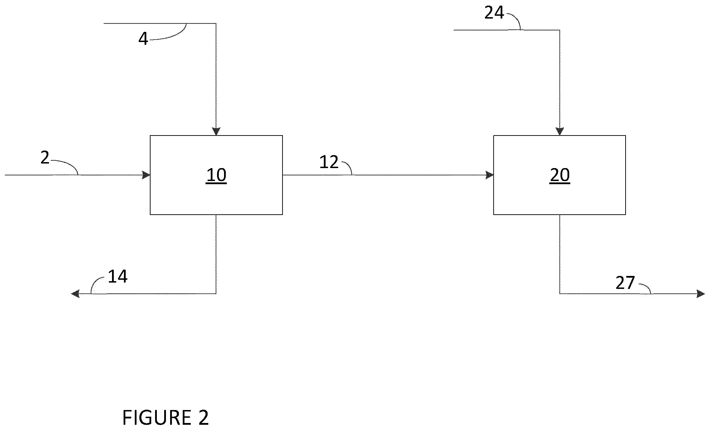

Referring to Figure 2. The first feedstock stream 2,which contains at least a portion of fossil components (e.g. hydrocarbons), is at least partially endothermically reacted in first reactor 10, generating a first process stream 12 that has a certain amount of heat at a temperature level suitable for ammonia conversion to hydrogen. In first reactor 10, the heat required to chemically transform first feedstock stream 2 into first process stream 12 is, at least partially, provided by stream 4, which is cooled in first reactor 10 into stream 14. In certain embodiments, stream 4 can be a flue gas stream resulting from combustion of a fuel in the presence of an oxidizer in manners known with SMR

In second reactor 20, a second feedstock stream 24, which contains at least a portion of non-fossil components (e.g, ammonia), is at least partially endothermically reacted to generate a second process stream 27, which contains at least a portion of hydrogen. In second reactor 20, the heat required to chemically transform second feedstock stream 24 into hydrogen product stream 27 is provided, at least partially, by first process stream 12 In the embodiment shown in FIG. 2, second reactor 20 preferably includes a gas heated reformer in which the tubes are filled with catalyst that are configured to catalytically convert ammonia to hydrogen in an endothermic reaction that is advanced using heat exchange from first process stream 12, while also intimately mixing the resulting converted stream with first process stream to ultimately produce hydrogen product stream 27. Hydrogen product stream therefore comprises hydrogen, nitrogen as well as unreacted hydrocarbons and other components typically associated with process streams of ATRs and SMRs, as well as any unreacted ammonia.

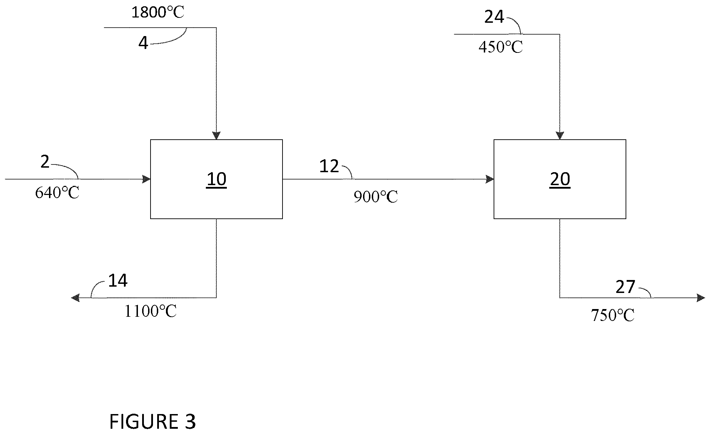

Figure 3 shows operating conditions according to one embodiment of the present invention. First feedstock stream 2, which is preferably a hydrocarbon such as natural gas, can be preheated to a temperature higher than 500°C, and preferably higher than 600°C prior entering first reactor 10, which in this example is an SMR. First process stream 12 leaves first reactor 10 at a temperature in excess of 800°C, preferably around 900°C. The heat for the endothermic reaction of conversion of stream 2 into first process stream 12 is provided by stream 4, which enters first reactor 10 at a temperature in excess of 1500°C, preferably 1800°C. Stream 4 is cooled down in first reactor 10 becoming stream 14, which leaves first reactor 10 at a temperature typically between 900°C and 1100°C. The operating pressure in first reactor 10 is typically between 20 bar(g) and 45 bar(g), preferably between 25 bar(g) and 35 bar(g).

Second feedstock stream 24, which is preferably preheated stream at a temperature typically above 400°C, preferably around 450°C, enters second reactor wherein it is converted and mixed with first process stream 12 to yield hydrogen products stream 27, which leaves the second reactor 20 at a temperature between 700°C and 800°C.

In some embodiments of the invention, first reactor 10 is a Steam Methane Reformer, with multiple tubes filled with catalyst suitable for steam reforming of hydrocarbons, arranged in a way that the required heat for the reforming reaction is provided via combustion of one or multiple fuels in a so called radiant box, and transferred mainly via radiation. In such an embodiment, stream 4 of Figure 1 is the hot flue gas obtained from the combustion reaction, while stream 14 is the cooled flue gas leaving the radiant box.

In other embodiments of the invention, first reactor 10 is an Autothermal Reforming reactor, which can include a vessel equipped with a device suitable to achieve a partial combustion of the hydrocarbon feed to provide heat for the reforming reaction taking place in a subsequent catalyst bed. The latter is made of one or more catalysts suitable for the hydrocarbon reforming reaction.

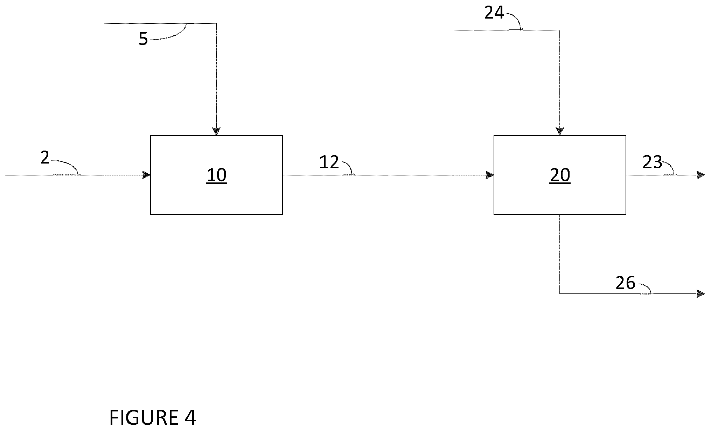

In Figure 4, which represents an embodiment similar to Figure 1, with the exception that first reactor 10 includes an ATR reactor, stream 5 represents a stream of air, O2-enriched air or substantially pure oxygen.

In certain embodiments of the invention, second reactor 20 can be an adiabatic vessel equipped with catalyst-filled tubes, with a tube side (e.g. inside the catalyst-filled tubes) and a shell side (outside of the tubes). In such an embodiment, the second feed stream enters the tube side, where it reacts on a catalyst suitable for ammonia conversion. The catalysts are preferably selected from the group consisting of nickel, cobalt, ruthenium, rhodium, and combinations thereof. In the shell side of second reactor 20, first process stream 12 leaving first reactor 10 is cooled, providing heating to the endothermic ammonia cracking reaction via indirect heat exchange.

In certain embodiments of the invention, second reactor 20 can be an adiabatic vessel equipped with catalyst-filled tubes that are open ended. In such an embodiment, the stream leaving the catalyst tube of second reactor 20 mixes with first process steam 12 leaving the first reactor 10 in the shell side of second reactor 20. The resulting mixed stream is then cooled providing the heat to the ammonia cracking reaction, eventually exiting second reactor 20 as hydrogen product stream 27.

Table 1, below, provides a comparison of a base case hydrogen plant versus a hydrogen plant in accordance with an embodiment of the present invention.

**Table 1**

| | Units | Base Case | Plant according to the new invention |
|---|---|---|---|
| H2 production | % | 100 | 100 |
| Hydrocarbon NG Feed | % | 100 | 85 |
| Non-FossilNH3 Feed | % | 0 | 100 |
| Hydrocarbon NG fuel | % | 100 | 75 |
| CO2 emissions | % | 100 | 85 |
| first reactor 10 duty | % | 100 | 85 |
| Duty to the steam network | % | 100 | 80 |

As can be seen, carbon dioxide emissions has been reduced by 15% while also producing less steam, which in certain cases can be advantageous.

While the invention has be described primarily in accordance with a steam methane reforming production unit, the invention can be equally applied to other hydrogen production facilities such as, but not limited to, autothermal reforming. In essence, embodiments of the invention include the combination of reducing CO2 in the flue gas by combining both hydrocarbon reforming and ammonia reforming in sequential steps and using the heat duty from the first step to provide the heat needed for the endothermic reaction of the ammonia reforming. Additionally, in certain embodiments of the present invention, hydrogen production facility can also encompass any plant that converts hydrocarbons to hydrogen (e.g., syngas, methanol, ammonia, etc.).

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations that fall within the spirit and broad scope of the appended claims. The present invention may suitably comprise, consist or consist essentially of the elements disclosed and may be practiced in the absence of an element not disclosed. Furthermore, language referring to order, such as first and second, should be understood in an exemplary sense and not in a limiting sense. For example, it can be recognized by those skilled in the art that certain steps or devices can be combined into a single step/device.

The singular forms "a", "an", and "the" include plural referents, unless the context clearly dictates otherwise. The terms about/approximately a particular value include that particular value plus or minus 10%, unless the context clearly dictates otherwise.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

## Claims

1. A method for generating hydrogen, the method comprising the steps of:
introducing a first feed stream comprised of hydrocarbon, at a first temperature, into a first reaction zone under conditions effective for producing a first process stream, wherein the first process stream is at a second temperature that is greater than the first temperature;
introducing a second feed stream into a second reaction zone under conditions effective for producing a hydrogen product stream, wherein heat needed for producing the hydrogen product stream from the second feed stream is at least partially provided by heat exchange with the process stream, wherein the second feed stream comprises ammonia and is substantially free of hydrocarbons; and
withdrawing the hydrogen product stream from the second reaction zone.

2. The method as claimed in Claim 1, wherein the second temperature is above 500°C, preferably above 700°C, more preferably above 800°C.

3. The method as claimed in Claim 1, wherein the hydrogen product stream is substantially free of hydrocarbons.

4. The method as claimed in Claim 1, wherein conditions effective for producing the first process stream include catalytically converting the first feed stream in the presence of steam, wherein the conditions effective for producing the hydrogen product stream comprise an absence of steam in the second reaction zone.

5. The method as claimed in Claim 1, wherein the first reaction zone is disposed within an autothermal reformer (ATR) or a steam methane reformer (SMR).

6. The method as claimed in Claim 1, wherein the second reaction zone is disposed within a gas heated reformer or a shell and tube heat exchanger.

7. An apparatus for generating hydrogen comprising:
a first reaction zone configured to convert a first feed stream comprised of hydrocarbon at a first temperature into a first process stream, wherein the first process stream is at a second temperature that is greater than the first temperature; and
a second reaction zone configured to convert a second feed stream into a hydrogen product stream,
wherein the second reaction zone is in fluid communication with the first reaction zone, such that the second reaction zone is configured to exchange heat between the first process stream and the second feed stream,
wherein the second reaction zone is in fluid communication with an ammonia source such that the second feed stream comprises ammonia.

8. The apparatus as claimed in Claim 7, wherein the second temperature is above 500°C, preferably above 700°C, more preferably above 800°C.

9. The apparatus as claimed in Claim 7, wherein the second reaction zone is in fluid communication with an ammonia source such that the second feed stream comprises ammonia.

10. The apparatus as claimed in Claim 7, wherein the heat exchange between the process stream and the second feed stream is conducted via indirect or direct heat exchange.

11. The apparatus as claimed in Claim 7, wherein the second reaction zone is disposed within a gas heated reformer or a shell and tube heat exchanger.

12. A method to retrofit an existing hydrogen generating plant, the method comprising:
providing the existing hydrogen generating plant, wherein the existing hydrogen generating plant uses hydrocarbons such as natural gas as a feed stream to produce hydrogen, wherein the existing hydrogen generating plant comprises a first reaction zone that is configured to convert hydrocarbons that are introduced to the first reaction zone at a first temperature to a process stream exiting the first reaction zone at a second temperature, wherein the second temperature is greater than the first temperature;
producing an upgraded hydrogen generating plant by adding a second reaction zone to the existing hydrogen generating plant, wherein the second reaction zone is located downstream of the first reaction zone, wherein the second reaction zone is configured to convert a second feed stream into a hydrogen product stream,
wherein the second reaction zone is in fluid communication with the first reaction zone, such that the second reaction zone is configured to exchange heat between the process stream and the second feed stream, thereby using heat from the process stream to carryout out a conversion reaction of the second feed stream to produce a hydrogen product stream,
wherein the second reaction zone is in fluid communication with an ammonia source such that the second feed stream comprises ammonia.

13. The method as claimed in Claim 12, wherein the upgraded hydrogen generating plant is configured to produce less steam than the existing hydrogen generating plant.

14. The method as claimed in Claim 12, wherein the heat exchange between the process stream and the second feed stream is conducted via indirect or direct heat exchange.
